# EUROPEAN PATENT APPLICATION

(11) **EP 3 750 743 A1**
(43) Date of publication of application: **16.12.2020**
(21) Application number: 20179057.3
(22) Date of filing: 09.06.2020
(51) Int. Cl.: B60N 2/28, B60N 2/10

(54) **CHILD SEAT**

(30) Priority: 10.06.2019 JP 2019107831
(71) Applicant: Combi Corporation, Tokyo-to (JP)
(72) Inventor: OHYAMA, Tatsuya, Saitama-ken (JP)
(74) Representative: Liesegang, Eva

(57) **Abstract**

A child seat (10) includes: a platform (20); a base (60) supported on the platform (20) such that the inclination of the base (60) can be changed; and a seat section (40) rotatably and detachably supported on the base (60).

## Description

### Field of the Invention

The present invention relates to a child seat.

### Background Art

Regarding a child seat (child safety seat) used when a child or infant rides in a passenger car or the like, various proposals have been made. For example, JP2002-301964A discloses a child seat having a platform to be attached to a vehicle seat, and a seat section supported on the platform. In this child seat, the seat section can slide relative to the platform so as to change the inclination of the seat section relative to the platform (i.e., so as to recline the seat section). In addition, the seat section is attached to the platform so as to be rotatable relative to the platform. Thus, a child or infant can be seated on the seat section such that he/she faces forward in the traveling direction of a vehicle, and also the child or infant can be seated on the seat section such that he/she faces rearward in the traveling direction.

One of the needs for such a child seat is that the seat section can be detached from the platform.

### Summary of the Invention

The present invention has been made in view of the above circumstances. The object of the present invention is to provide a child seat in which a seat section can recline and rotate relative to a platform, and also can be detached from the platform.

A child seat according to the present invention comprises:
a platform;
a base supported on the platform such that the inclination of the base can be changed; and
a seat section rotatably and detachably supported on the base.

In the child seat according to the present invention,
when the seat section is located in a predetermined detachment position with respect to the base, the seat section may be detachable from the base, and when the seat section is located in a relative rotation position other than the detachment position with respect to the base, the seat section may not be detachable from the base.

In the child seat according to the present invention,
one of the base and the seat section may have a disengagement prevention lug that projects in one direction of a radial direction around an axis of rotation of the seat section relative to the base;
the other one of the base and the seat section may have a disengagement prevention flange that projects in the opposite direction of the radial direction; and
the disengagement prevention flange may include a cutout or a gap that has a width along a circumferential direction around the axis, the width being longer than a width of the disengagement prevention lug along the circumferential direction.

In the child seat according to the present invention,
the disengagement prevention flange may circumferentially extend along the circumferential direction.

In the child seat according to the present invention,
one of the base and the seat section may have a lock member that is movable between an interference position and a release position;
when the lock member is located in the interference position, detachment of the seat section from the base may be prevented by contact between the lock member and the other one of the base and the seat section; and
when the lock member is located in the release position, the detachment of the seat section from the base may be allowed.

In the child seat according to the present invention,
one of the base and the seat section may have a lock member that is movable between an interference position and a release position;
the other one of the base and the seat section may have a restriction portion that is provided in a position where, in a projection in a movement direction along which the seat section moves when it is detached from the base, the restriction portion overlaps with the lock member located in the interference position, and does not overlap the lock member located in the release position; and
the detachment of the seat section from the base may be prevented by the restriction portion and the lock member located in the interference position.

In the child seat according to the present invention,
in a state where a force for detaching the seat section from the base is not applied, the lock member may be spaced apart from the base and the seat section.

In the child seat according to the present invention,
the lock member may have a first lock member and a second lock member that can move independently of each other; and
one of the base and the seat section may have a first operation member and a second operation member that can be operated independently of each other, a first operation transmission means that is provided between the first operation member and the first lock member so as to transmit a movement of the first operation member to the first lock member, and a second operation transmission means that is provided between the second operation member and the second lock member so as to transmit a movement of the second operation member to the second lock member.

In the child seat according to the present invention,
the seat section may have a seat section frame supported on the base, a cushion member supported on the seat section frame, and the first operation member and the second operation member positioned opposite one another with the cushion member present between the first operation member and the second operation member.

In the child seat according to the present invention,
the seat section may have: a seat section frame supported on the base, the seat section frame having a seat portion, a backrest portion, and first and second side portions that are provided oppositely to each other; the first operation member provided on the first side portion of the seat section frame; and the second operation member provided on the second side portion of the seat section frame.

In the child seat according to the present invention,
one of the base and the seat section may have an operation member that moves from a not-operated position to an operated position when operated, and an operation transmission means that moves the lock member from the interference position to the release position in accordance with the movement of the operation member from the not-operated position to the operated position; and
the operation member may move from the not-operated position to the operated position along a direction parallel to a direction of a relative movement of the seat section and the base when the seat section is detached from the base.

A child seat according to the present invention comprises:
a platform; and
a seat section provided on the platform such that the inclination of the seat section relative to the platform can be changed, and that the seat section is rotatable relative to the platform and is separable from the platform.

The present invention can provide a child seat in which a seat section can be reclined and rotated relative to a platform, and also can be detached from the platform.

### Brief Description of the Drawings

Fig. 1 is perspective view showing an embodiment of a child seat according to the present invention.
Fig. 2 is a side view showing the child seat, for describing a reclining movement of a seat body.
Fig. 3 is a side view showing the child seat, for describing a rotating movement of the seat body.
Fig. 4 is a perspective view showing the seat section separated from the platform and the base.
Fig. 5 is a top view of the child seat in which the seat section is located in the detachment position.
Fig. 6 is a perspective view showing the seat section seen from a bottom surface side.
Fig. 7 is a plan view showing the seat section seen from the bottom surface side.
Fig. 8 is a partial sectional view showing a part of the child seat taken along the A-A line shown in Fig. 7.
Fig. 9 is a partial sectional view showing a part of the child seat taken along the B-B line shown in Fig. 7.
Fig. 10 is a partial enlarged view showing a part of the sectional view shown in Fig. 9.
Fig. 11 is a side view showing the operation member, for describing the change in state of the operation member when it is in the not-operated position and when it is in the operated position.
Fig. 12 is a perspective view showing the platform and the base supported on the platform.
Fig. 13 is an exploded perspective view of the base shown in Fig. 12.
Fig. 14 is a perspective view showing the platform and an engagement part of the base shown in Fig. 12.
Fig. 15 is a top view showing a seat section holder of the base and a disengagement prevention lug of the seat section.

### Detailed Description of the Invention

Herebelow, an embodiment of the present invention is described with reference to the drawings.

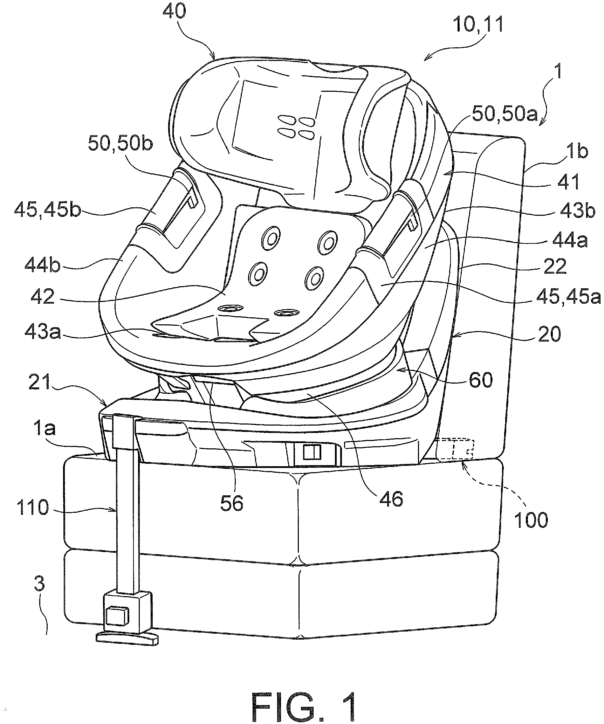

Fig. 1 is a view for describing an embodiment of a child seat (child car seat) 10 according to the present invention. Fig. 1 is a perspective view of the child seat 10.

As shown in Fig. 1, the child seat 10 in this embodiment has, as a child seat body 11, a platform 20 to be fixed on a seat 1 of a vehicle (e.g., automobile), and a seat section 40 provided on the platform 20 such that the inclination of the seat section 40 relative to the platform 20 can be changed, and that the seat section 40 is rotatable relative to the platform 20 and is separable from the platform 20. In the illustrated example, the child seat 10 has, as the child seat body 11, the platform 20, a base 60 supported on the platform 20, and the seat section 40 supported on the base 60. As shown in Fig. 1, the child seat 10 further has a fixing tool 100 extending rearward from a back surface of the platform 20. By connecting the fixing tool 100 to a not-shown anchoring tool (e.g., a latch compatible with ISOFIX) provided on the vehicle seat 1, the child seat 10 is fixed on the vehicle seat 1. In addition, the child seat 10 has a support leg 110 removably fixed on the platform 20 of the child seat body 11. The support leg 110 extends down to the floor surface 3 of the vehicle, which supports the vehicle seat 1, so as to support the front part of the child seat body 11 (the platform 20) from below.

The platform 20 has a proximal portion 21 to be placed on the seat portion 1a of the vehicle seat 1, and a standing portion 22 standing up from the proximal portion 21 and to be positioned so as to face the backrest portion 1b of the vehicle seat 1.

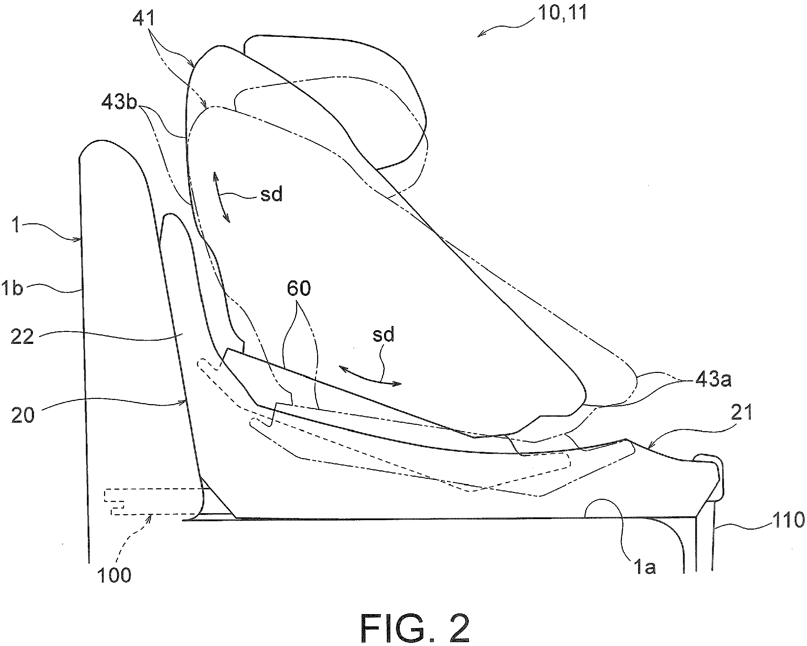

Fig. 2 is a view for describing the reclining movement of the child seat 10. As shown in Fig. 2, the base 60 is supported on the platform 20 such that the inclination of the base 60 can be changed. To be more specific, the base 60 is slidable relative to the platform 20 along a direction sd along the vertical plane that spreads in the back and forth direction and the up and down direction.

As shown in Fig. 1, the seat section 40 includes a seat section frame 41, and a cushion member 42 supported on the seat section frame 41. The seat section frame 41 has a seat portion 43a supported on the base 60, a backrest portion 43b extending from the seat portion 43a, and first and second side portions 44a, 44b that are provided oppositely to each other in the width direction of the seat section 40. In addition, the seat section frame 41 is provided with a gripping portion 45 to be gripped by a user when he/she carries the seat section 40. In the illustrated example, the seat section frame 41 has a first gripping portion 45a and a second gripping portion 45b that are provided in opposite positions to each other across the cushion member 42. In the illustrated example, the first gripping portion 45a and the second gripping portion 45b are provided on the first side portion 44a and the second side portion 44b, respectively.

The seat section frame 41 is supported on the base 60. Thus, as shown in Fig. 2, when the base 60 slides relative to the platform 20 so that the inclination of the base 60 changes, the seat section frame 41 moves together with the base 60 relative to the platform 20 so that the inclination of the seat section frame 41 relative to the platform 20 changes. Thereby, the seat section 40 can be reclined.

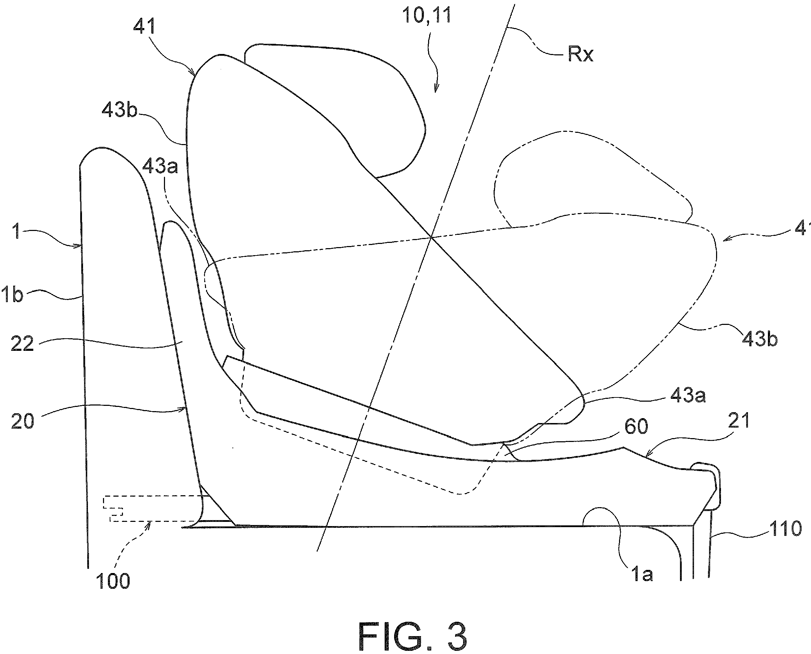

Fig. 3 is a view for describing the rotating movement of the seat section frame 41. As shown in Fig. 3, the seat section frame 41 is rotatable relative to the base 60 around a rotation axis Rx along the vertical plane. By rotating the seat section 40 relative to the base 60, as shown in Fig. 3, a child or infant can be seated on the child seat 10 so as to face the rearward of the vehicle. Herebelow, the state of the seat section 40 shown by solid lines in Fig. 3 is referred to as "forward-facing state" of the seat section 40, while the state of the seat section 40 shown by two-dot chain lines in Fig. 3 is referred to as "rearward-facing state" of the seat section 40.

In this specification, terms "up", "down", "front/forth/forward" and "back/rear/rearward/behind" with respect to the seat section 40 of the child seat 10 mean, unless otherwise specified, "up", "down", "front/forth/forward" and "back/rear/rearward/behind" with reference to a child or infant seated on the seat section 40. In addition, the terms "up", "down", "front/forth/forward" and "back/rear/rearward/behind" with respect to the platform 20 and the base 60 of the child seat 10 mean, unless otherwise specified, "up", "down", "front/forth/forward" and "back/rear/rearward/behind" with reference to the normal travel of the vehicle.

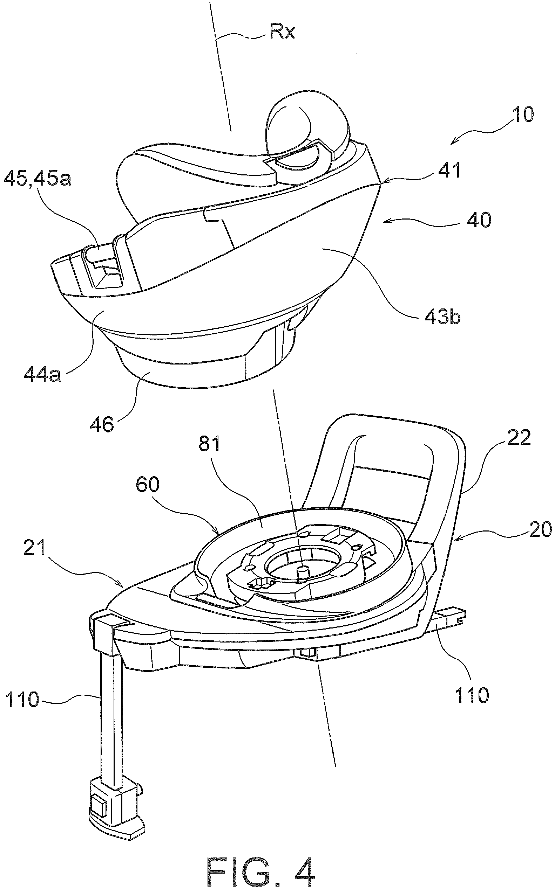

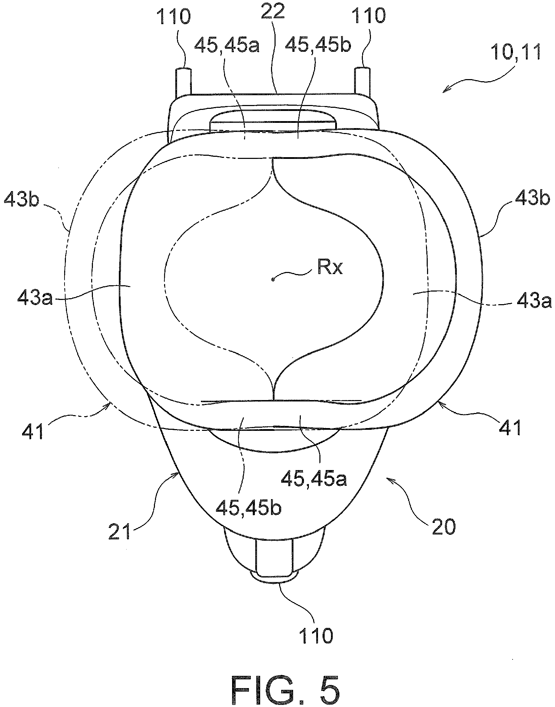

Fig. 4 is a view showing the seat section 40 separated from the platform 20 and the base 60. As shown in Fig. 4, the seat section frame 41 is connected detachably from the base 60 and the platform 20. By rotating the seat section frame 41 relative to the base 60 and the platform 20 up to the detachment positions shown by the solid lines and the two-dot chain lines in Fig. 5, the seat section frame 41 can be detached from the base 60 and the platform 20. Thus, a child or infant seated on the seat section 40 can be moved together with the seat section 40 from the base 60 and the platform 20. The seat section 40 can be detached in the direction along the axis Rx of the rotation of the seat section 40 relative to the base 60.

Herebelow, the respective portions of the child seat body 11 are described in more detail.

The seat section 40 is firstly described. As described above, the seat section 40 has the seat section frame 41 supporting the cushion member 42. The seat section frame 41 has the seat portion 43a, the backrest portion 43b, and the first and second side portions 44a, 44b that are provided oppositely to each other. The first side portion 44a and the second side portion 44b are positioned on one side and the other side of the cushion member 42 in the width direction of the seat section 40. The first side portion 44a is provided with the first gripping portion 45a, and the second side portion 44b is provided with the second gripping portion 45b.

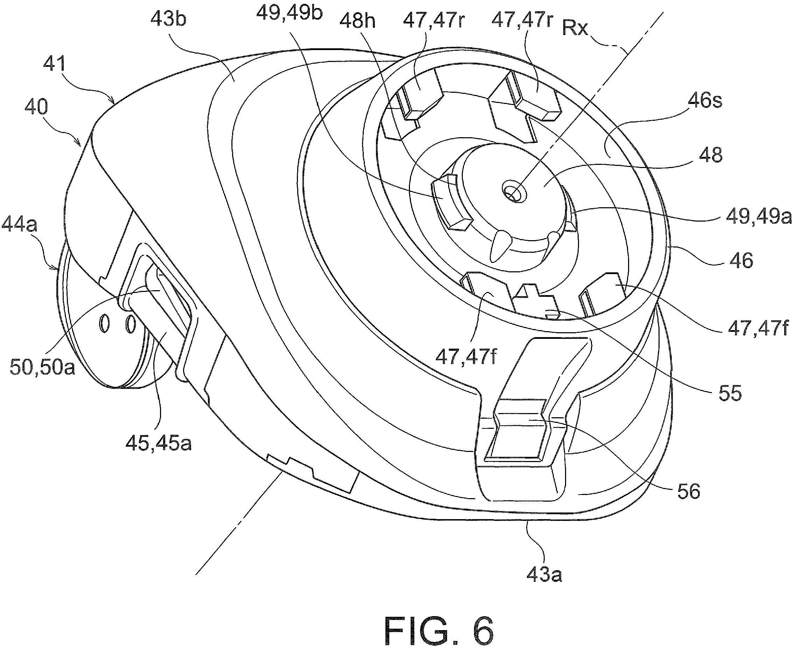

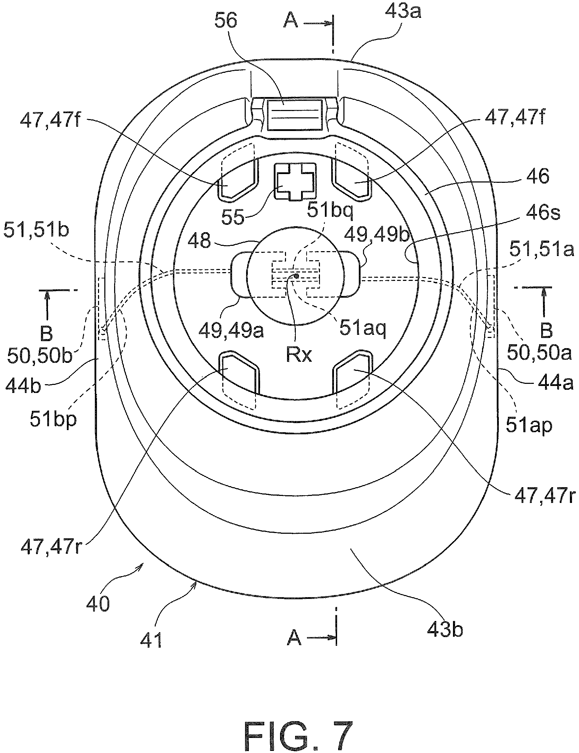

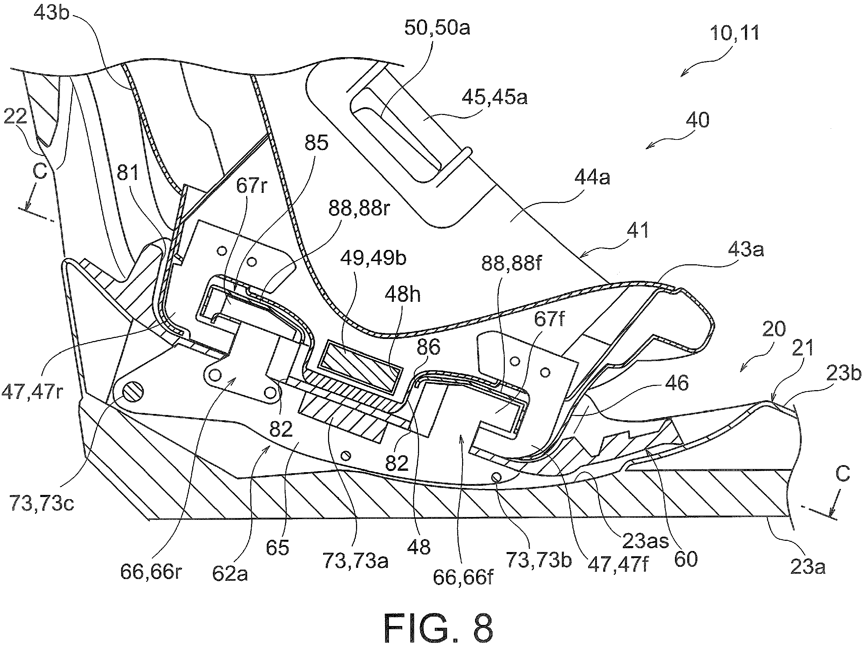

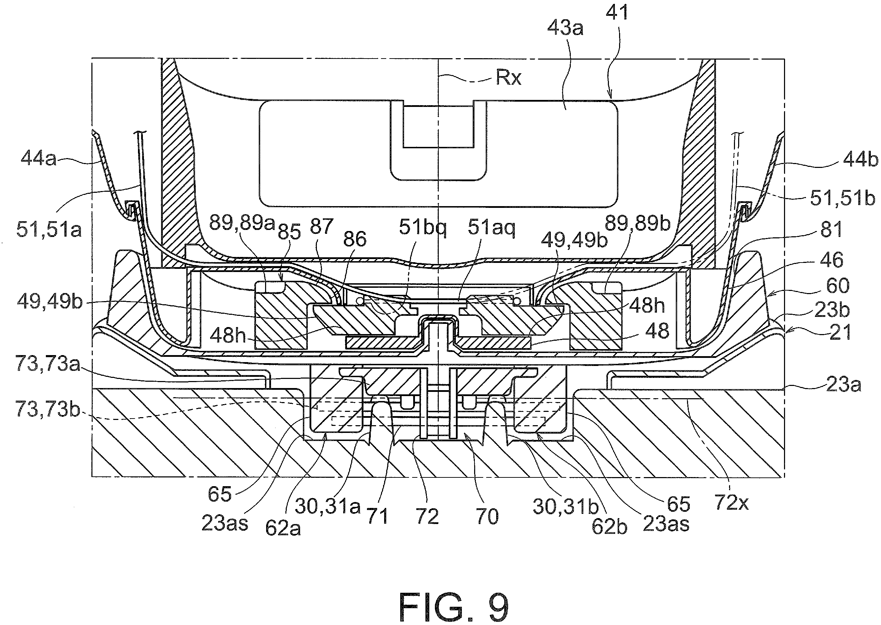

Figs. 6 and 7 are views showing the seat section 40 seen from its bottom surface side. In addition, Figs. 8 and 9 are views schematically showing a sectional view of a part of the seat section 40 respectively taken along the A-A line and the B-B line in Fig. 7 together with the sectional view of the base 60 and the platform 20. As shown in Figs. 4 to 9, the seat section frame 41 has a connection protrusion 46 that projects downward from the bottom surface of the seat portion 43a along the direction in which the rotation axis Rx extends. In a state where the seat section 40 is supported on the base 60, the connection protrusion 46 is received in a corresponding connection recess 81 in the base 60. As can be understood from Figs. 6 and 7, the connection protrusion 46 has generally a cylindrical shape having an axis on the rotation axis Rx.

As shown in Fig. 6, the seat section 40 has a disengagement prevention lug 47 that projects in one direction of the radial direction around the axis Rx of the rotation of the seat section 40 relative to the base 60. In the illustrated example, the disengagement prevention lug 47 projects inward in the radial direction around the rotation axis Rx, from the inner circumferential surface 46s of the connection protrusion 46. Since, in relative rotation positions other than the predetermined aforementioned detachment position, the disengagement prevention lug 47 interferes with the base 60, the seat section 40 located in the relative rotation positions can be prevented from being disengaged from the base 60 (prevented from getting out of the base 60). In the illustrated example, the disengagement prevention lug 47 has a pair of rear disengagement prevention lugs 47r that project forward from the rear part of the inner circumferential surface 46s, and a pair of front disengagement prevention lugs 47f that project rearward from the front part of the inner circumferential surface 46s. The four disengagement prevention lugs 47 are provided correspondingly to below-described rear lugs 66r and front lugs 66f of the base 60.

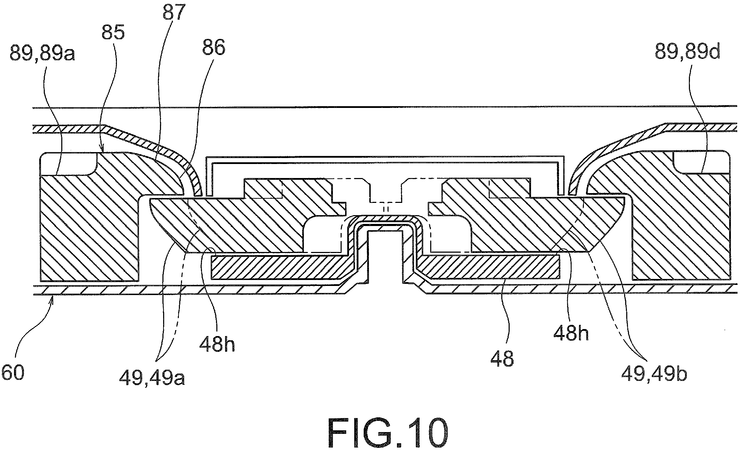

As shown in Figs. 6 and 7, inside the cylindrical connection protrusion 46 (the area of the bottom surface of the seat portion 43a surrounded by the connection protrusion 46), an inside protrusion 48 is provided. The inside protrusion 48 projects downward from the bottom surface of the seat portion 43a along the direction in which the rotation axis Rx extends. The inside protrusion 48 has generally a columnar shape whose axis is on the rotation axis Rx. As shown in Figs. 9 and 10, the inside protrusion 48 is hollow. In the circumferential surface of the inside protrusion 48, an insertion hole 48h into which a below-described lock member 49 is inserted is formed.

As shown in Figs. 7 to 9, the lock member 49, which restricts the detachment of the seat section 40 from the base 60, is accommodated within the inside protrusion 48. The lock member 49 is movable between an interference position in which a part of the lock member 49 projects from the inside protrusion 48, and a release position in which the lock member 49 is positioned within the inside protrusion 48 entirely. The lock member 49 located in the interference position is in contact with (interferes with) the base 60, thereby preventing the detachment of the seat section 40 from the base 60. On the other hand, when the lock member 49 is located in the release position, the detachment of the seat section 40 from the base 60 is allowed. Thus, unintentional disengagement of the seat section 40 from the base 60 can be effectively prevented, while the seat section 40 can be detached from the base 60 when required.

In the illustrated example, the lock member 49 has a first lock member 49a and a second lock member 49b. The first lock member 49a and the second lock member 49b are located on the aforementioned other side and the aforementioned one side of the rotation axis Rx in the width direction of the seat section 40. Each of the lock members 49a, 49b can move independently of each other in the width direction of the seat section 40, between the interference position shown by solid lines in Fig. 10 and the release position shown by two-dot chain lines in Fig. 10. By moving the first lock member 49a from the interference position to the one side in the width direction, the first lock member 49a shifts to the release position within the inside protrusion 48. In addition, by moving the second lock member 49b from the interference position to the other side in the width direction, the second lock member 49b shifts to the release position within the inside protrusion 48. The lock members 49a, 49b are urged by not-shown urging means to the other side and the one side in the width direction, respectively. Thus, when force for moving the lock member 49 is not applied to the lock member 49, each lock member 49 is in the interference position.

As shown in Figs. 6 and 7, the seat section 40 is provided with an operation member 50 and an operation transmission means 51 for moving the lock member 49 from the interference position to the release position. When the operation member 50 is operated, it moves from a not-operated position to an operated position. The operation transmission means 51 moves the lock member 49 from the interference position to the release position in accordance with the movement of the operation member 50 from the not-operated position to the operated position.

In the illustrated example, as shown in Fig. 7, a first operation member 50a and a first operation transmission means 51a are provided correspondingly to the first lock member 49a. In addition, a second operation member 50b and a second operation transmission means 51b are provided correspondingly to the second lock member 49b.

The first operation member 50a and the second operation member 50b can operate the first lock member 49a and the second lock member 49b independently of each other. The first operation member 50a and the second operation member 50b are positioned opposite one another so that the cushion member 42 supported on the seat section frame 41 is present between the first operation member 50a and the second operation member 50b. Thus, a user can operate the operation members 50a, 50b while holding the seat section 40 stably from both sides of the cushion member 42. Namely, it is easy to operate the operation members 50a, 50b when detaching the seat section 40 from the base 60.

In the illustrated example, the first operation member 50a and the second operation member 50b are provided on the aforementioned one side and the aforementioned other side in the width direction of the seat section 40. To be more specific, the first operation member 50a and the second operation member 50b are provided on the first gripping portion 45a and the second gripping portion 45b, respectively. In this case, when the seat section 40 is rotated up to a position where it faces a lateral side of the vehicle (a position facing the doorway of the vehicle), it is easy to take the seat section 40 out of the vehicle through the doorway of the vehicle. In general, the size of the seat section 40 in the width direction is smaller than the size of the seat section 40 in the back and forth direction. Thus, by rotating the seat section 40 up to the position at which it faces the doorway of the vehicle, the seat section 40 can be easily taken out even if the doorway is narrow.

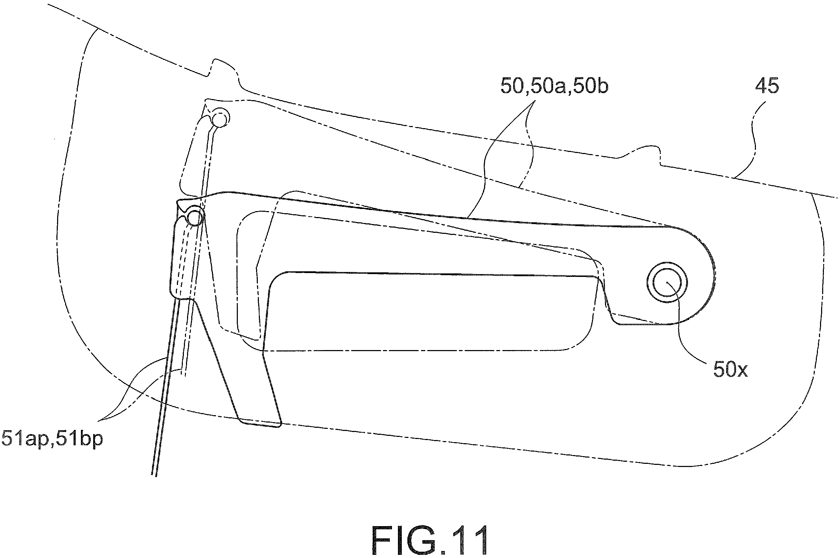

Each of the operation members 50a, 50b is moved from the not-operated position to the operated position, along the direction parallel to the relative movement direction of the seat section 40 and the base 60 along which the seat section 40 moves when it is detached from the base 60 (i.e., the direction along the rotation axis Rx or the up and down direction). In the illustrated example, as shown in Fig. 11, the first operation member 50a and the second operation member 50b are levers that turns around a rotation axis 50x extending along the width direction of the seat section 40. By pulling upward the rear end of the operation member 50a, 50b, the operation member 50a, 50b is moved from the not-operated position to the operated position. Since the movement direction of the operation member 50 from the not-operated position to the operated position is along the aforementioned relative movement direction, it is easy to carry out the operation of the operation member 50 and the operation for separating the seat section 40 from the base 60 (the operation for bringing up the seat section 40 along the aforementioned relative movement direction) as a series of operations. Namely, the detachment operation of the seat section 40 from the base 60 is simplified.

The first operation transmission means 51a is provided between the first operation member 50a and the first lock member 49a so as to transmit the movement of the first operation member 50a to the first lock member 49a. In addition, the second operation transmission means 51b is provided between the second operation member 50b and the second lock member 49b so as to transmit the movement of the second operation member 50b to the second lock member 49b. The first operation transmission means 51a and the second operation transmission means 51b are linear members. As shown in Fig. 9, the respective operation transmission means 51 extend in the seat portion 43 of the seat section 40 substantially in the width direction. In addition, the respective operation transmission means 51 extend in the first side portion 44a and the second side portion 44b of the seat section 40 in the up and down direction.

As shown in Figs. 7 and 11, one end 51ap of the first operation transmission means 51a is connected to the rear end of the first operation member 50a. In addition, as shown in Figs. 7 and 9, the other end 51aq of the first operation transmission means 51a is connected to the first lock member 49a. In addition, as shown in Figs. 7 and 11, one end 51bp of the second operation transmission means 51b is connected to the rear end of the second operation transmission member 50b. In addition, as shown in Figs. 7 and 9, the other end 51bq of the second operation transmission means 51b is connected to the second lock member 49b.

Regarding the aforementioned lock member 49, the operation member 50 and the operation transmission means 51, when the first operation member 50a and the second operation member 50b are operated and moved from the not-operated position to the operated position, the one ends 51ap, 51bp of the corresponding operation transmission means 51 are pulled upward, so that the other ends 51aq, 51bq of the corresponding operation transmission means 51 are respectively pulled to the aforementioned one side and the aforementioned other side in the width direction. Thus, the lock members 49a, 49b are respectively moved to the one side and the other side in the width direction and to the non-interference positions in the inside protrusion 48.

Due to the provision of two sets of locking members 49a, 49b and the operation members 50a, 50b that are operated independently of each other, unintentional disengagement of the seat section 40 from the base 60 can be more effectively prevented. This is because, only when the first operation member 50a and the operation member 50b are simultaneously operated, both the lock members 49a, 49b move to the non-interference positions and the detachment of the seat section 40 from the base 60 is allowed.

As shown in Figs. 6 and 7, a rotation restriction protrusion 55 is provided inside the cylindrical connection protrusion 46. The rotation restriction protrusion 55 is movable between a projecting position in which a part of the rotation restriction protrusion 55 projects downward from the bottom surface of the seat portion 43a, and an accommodation position in which the rotation restriction protrusion 55 is entirely accommodated within the seat portion 43a. The rotation restriction protrusion 55 can be operated by means of a rotation restriction protrusion operation means 56 provided on the seat section 40 so as to move from the projecting position to the accommodation position. When the rotation restriction protrusion 55 located in the projecting position is received in a below-described rotation restriction recess 89 in the base 60, the turning of the seat section 40 relative to the base 60 is prevented. The rotation restriction protrusion 55 is urged by a not-shown urging means to the projecting position. Thus, when the rotation restriction protrusion operation means 56 is not operated, the rotation restriction protrusion 55 is in the projecting position.

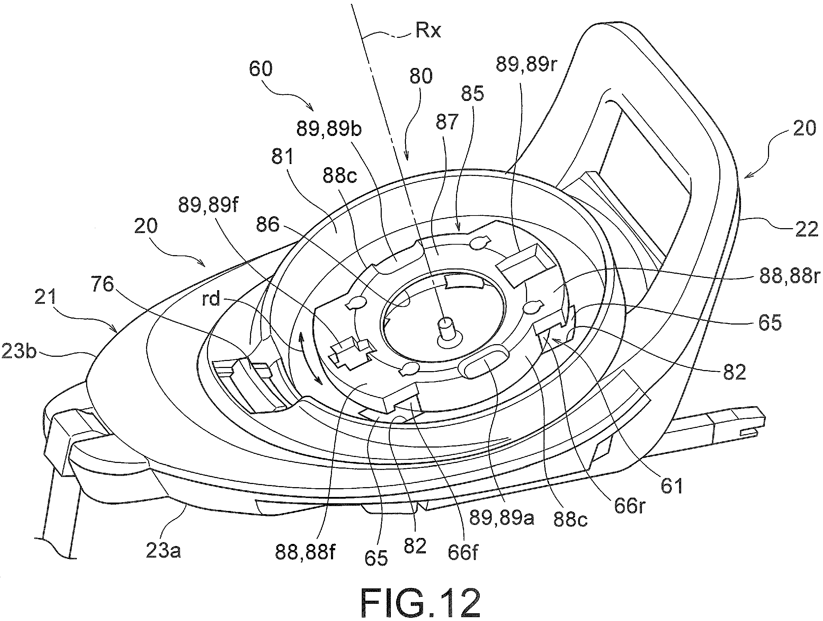

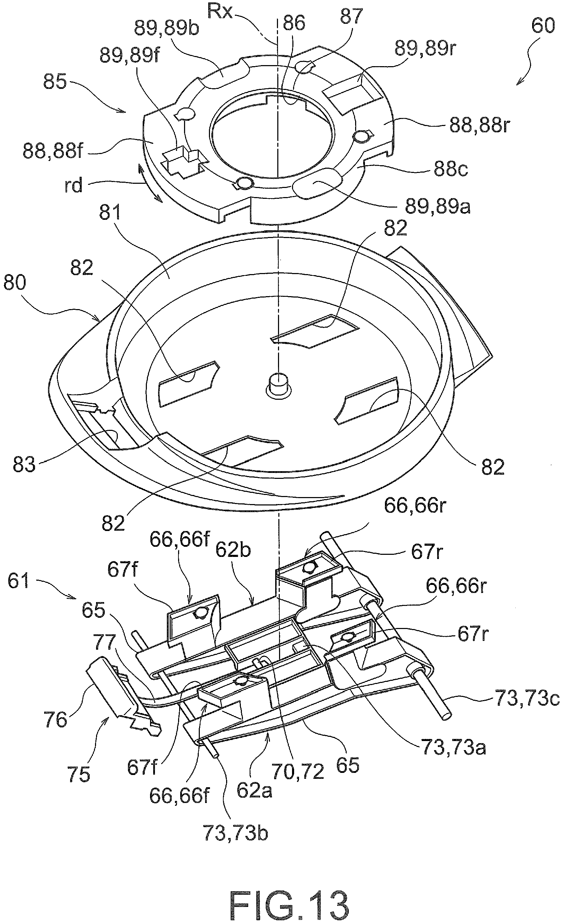

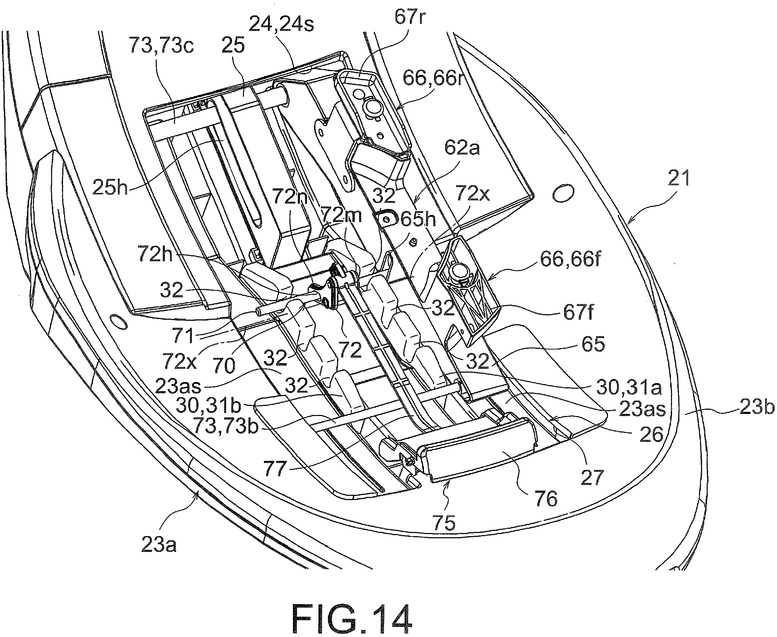

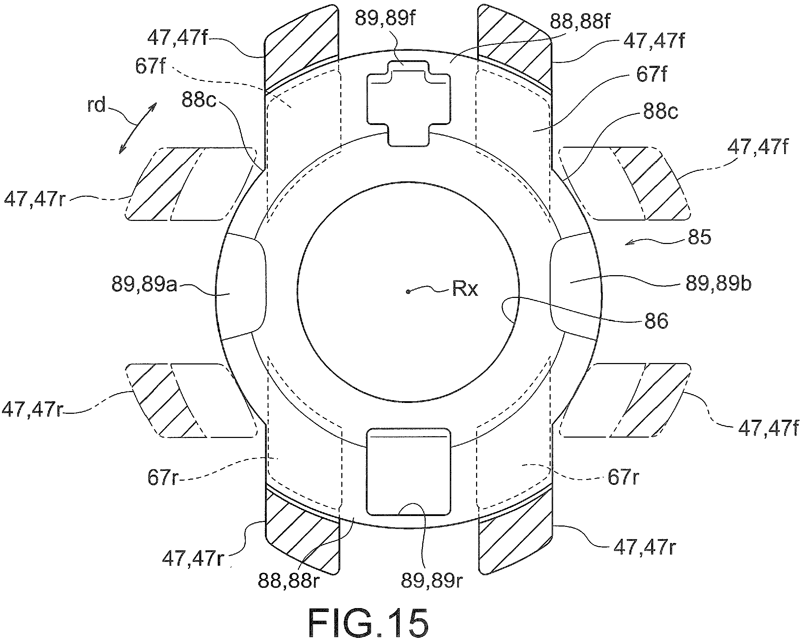

Next, with reference to Figs. 8 to 10 and 12 to 15, the base 60 is described. Fig. 12 is a perspective view showing the base 60 supported on the platform 20. In addition, Fig. 13 is an exploded view of the base 60 shown in Fig. 12. Fig. 14 is a view showing a below-described leg portion 62a and an engagement portion 70 of the base 60 supported on the platform 20. In order for clarification of illustration, illustration of one leg portion 62b of a pair of leg portions 62a, 62b of the base 60 is omitted in Fig. 14. In addition, Fig. 15 shows a below-described seat section holder 85 of the base 60 and the disengagement prevention lug 47 of the seat section 40 in a section of the child seat 10 taken along the C-C line in Fig. 8.

As shown in Figs. 12 and 13, the base 60 has a base body 61, a cover member 80 that covers the proximal portion 21 of the platform 20 as well as the base body 61, and the seat section holder 85 disposed on the cover member 80 so as to hold the seat section 40.

As shown in Fig. 13, the base body 61 has a pair of leg portions 62a, 62b that extend in the back and forth direction of the base 60 and are spaced apart from each other in the width direction of the base 60, the engagement portion 70 that engages the leg portions 62a, 62b with the proximal portion 21 of the platform 20, and an operation portion 75 that operates the engagement portion 70.

The leg portions 62a, 62b each have a leg-portion slidable contact portion 65 that is disposed below the cover member 80 and is in slidable contact with the proximal portion 21 of the platform 20, and a leg-portion lug 66 projecting upward from the leg-portion slidable contact portion 65. The leg-portion lug 66 includes a rear lug 66r projecting from the rear half of each leg-portion slidable contact portion 65, and a front lug 66f projecting from the front half of each leg-portion slidable contact portion 65. The leg portions 62a, 62b are disposed on both sides of the rotation axis Rx in the width direction of the base 60. The four leg-portion lugs 66 are disposed on the same circle around the rotation axis Rx.

Each of the leg-portion lugs 66r, 66f is provided with an extension 67r, 67f extending outward from the upper end of the leg-portion lug 66r, 66f in the radial direction around the rotation axis Rx. To be specific, the rear lug 66r is provided with the rear extension 67r extending rearward from the upper end of the rear lug 66r. In addition, the front lug 66f is provided with the front extension 67f extending forward from the upper end of the front lug 66f. As shown in Fig. 8, between the rear and front extensions 67r, 67f and the upper surface of the leg-portion slidable contact portion 65, the disengagement prevention lug 47 is disposed so that the seat section 40 is securely held by the base 60.

The leg portions 62a, 62b are connected to each other by a connection 73. The connection 73 has a main connection 73a that connects the central parts of the leg-portion slidable contact portions 65 in the back and forth direction, and a front-end connection shaft 73b that connects the front ends of the leg-portion slidable contact portions 65. In addition, at the rear ends of the leg portions 62a, 62b, the pair of them holds a rear-end connection shaft 73c that connects the pair of leg portions 62a, 62b and the platform 20.

As well shown in Fig. 14, the engagement portion 70 has an engagement shaft 71 that extends in the width direction of the base 60 so as to be engaged with the proximal portion 21 of the platform 20, and a support portion 72 that supports the engagement shaft 71.

The support portion 72 is supported on the main connection 73a between the pair of leg portions 62a, 62b. The support portion 72 is supported so as to be turnable around a rotation axis 72x extending in the width direction of the base 60. The support portion 72 has an upper end 72m positioned above the rotation axis 72x, and a rear end 72n positioned behind the rotation axis 72x. The operation portion 75 is connected to the upper end 72m of the support portion 72. In addition, the rear end 72n of the support portion 72 includes an insertion hole 72h. The engagement shaft 71 is inserted into the insertion hole 72. By operating the operation portion 75 so as to pull forward the upper end 72m of the support portion 72, the support portion 72 turns around the rotation axis 72x so that the rear end 72n of the support portion 72 moves upward together with the engagement shaft 71. Since the support portion 72 is urged by a not-shown urging means, when the operation of the operation portion 75 is finished, the rear end 72n moves downward together with the engagement shaft 71.

The engagement shaft 71 extends in the width direction of the base 60 to be engaged with below-described ridges 31a, 31b. To be specific, the engagement shaft 71 is received in grooves 32 in the ridges 31a, 31b. As described above, the engagement shaft 71 is moved in the up and down direction in accordance with the turning of the support portion 72. By moving the engagement shaft 71 upward, it gets out of the grooves 32 in the ridges 31a, 31b, thereby disengaging the engagement shaft 71 and the ridges 31a, 31b.

Both ends of the engagement shaft 71 are received in engagement-shaft receiving holes 65h that are formed in the side surfaces of the respective leg-portion slidable contact portions 65, which surfaces are opposed to each other. Since the engagement-shaft receiving holes 65h extend in the up and down direction, the upward and downward movement of the engagement shaft 71 relative to the leg portions 62a, 62b is allowed. Meanwhile, since the engagement shaft 71 is received in the engagement-shaft receiving holes 65h, the back and forth movement of the engagement shaft 71 relative to the leg portions 62a, 62b is prevented. Thus, when the engagement shaft 71 moves in the back and forth direction, the leg portions 62a, 62b also move in the back and forth direction.

The operation portion 75 includes a tab 76 and a connection means 77 connecting the tab 76 and the support portion 72. By pulling the tab 76 forward, the upper end 72m of the support portion 72 is pulled forward so that the support portion 72 turns around the rotation axis 72x. Then, the rear end 72n of the support portion 72 is raised together with the engagement shaft 71. In addition, by pulling the tab 76 further forward, the engagement shaft 71 and the pair of leg portions 62a, 62b move forward together with the support portion 72.

As shown in Fig. 13, the cover member 80 has a connection recess 81 that receives the connection protrusion 46 of the seat section 40. The bottom surface of the connection recess 80 has lug through-holes 82 through which the rear lugs 66r and the front lugs 66f of the leg portions 62a, 62b extend. Since the rear lugs 66r and the front lugs 66f extend through the lug through-holes 82, the cover member 80 is secured on the pair of leg portions 62a, 62b. In front of the connection recess 81, a tab through-hole 83 is formed to expose a part of the tab 76 of the operation portion 75.

As shown in Fig. 8, the seat section holder 85 covers the rear lugs 66r and the front lugs 66f that extend through the lug through-holes 82 in the cover member 80 and project upward from the bottom surface of the cover member 80. As shown in Figs. 12 and 13, in the center of the seat section holder 85, a central opening 86 is formed. As can be understood from Fig. 13, the central opening 86 has a circular shape around the axis Rx of the rotation of the seat section 40 with respect to the base 60.

As can be understood from Fig. 10, the inside protrusion 48 of the seat section 40 is received in the central opening 86. When the lock member 49 of the seat section 40 is located in the interference position (the position shown by solid lines in Fig. 10), the lock member 49 is in contact with (interferes with) the seat section holder 85 from below, thereby the detachment of the seat section 40 from the base 60 is prevented. On the other hand, when the lock member 49 is located in the release position (the position shown by two-dot chain lines in Fig. 10), the lock member 49 and the seat section holder 85 are not in contact with (do not interfere with) each other, thereby the detachment of the seat section 40 from the base 60 is allowed. Namely, the peripheral portion 87 around the central opening 86 of the seat section holder 85 defines a restriction portion that restricts the seat section 40 from being detached from the base 60 by its contact (interference) with the lock member 49. The restriction portion 87 is provided, in a projection in the movement direction along which the seat section 40 moves when it is detached from the base 60, in a position where the restriction portion 87 overlaps with the lock member 49 located in the aforementioned interference position, and does not overlap with the lock member 49 located in the aforementioned release position. Due to the interference between the restriction portion 87 and the lock member 49 located in the interference position described above, the detachment of the seat section 40 from the base 60 is prevented.

In the illustrated example, in a state where a force for detaching the seat section 40 from the base 60 is not applied, the lock member 49 may be spaced apart from the restriction portion 87. In other words, the seat section 40 may not be held on the base 60 by the contact between the lock member 49 and the seat section holder 85. This is because the seat section 40 can also be held by the contact between its disengagement prevention lugs 47 and the aforementioned extensions 67r, 67f, or the contact between the disengagement prevention lugs 47 and a below-described disengagement prevention flange 88. In a case where the seat section 40 is not held on the base 60 by using the lock member 49, it is possible to employ the lock member 49 and members and mechanisms related to the lock member 49 having a low strength, which allows these members and mechanisms to be designed more freely.

As shown in Figs. 8, 12, 13 and 15, the seat section holder 85 further has the disengagement prevention flange 88 projecting outward in the radial direction around the rotation axis Rx. As shown in Fig. 8, the disengagement prevention flange 88 covers upper surfaces of the lugs 66r, 66f of the pair of leg portions 62a, 62b. By making the disengagement prevention lugs 47 and the disengagement prevention flange 88 interfere with each other, the disengagement of the seat section 40 from the base 60 can be prevented. The disengagement prevention flange 88 circumferentially extends along a circumferential direction rd around the rotation axis Rx. Thus, the rotation of the seat section 40 relative to the base 60 can be stabilized.

As shown in Figs. 12, 13 and 15, the disengagement prevention flange 88 includes a cutout 88c. As can be understood from Fig. 15, the width of the cutout 88c along the circumferential direction rd around the rotation axis Rx is longer than the width of the disengagement prevention lug 47 of the seat section 40 along the aforementioned circumferential direction rd. Thus, by rotating the seat section 40 relative to the base 60 up to the position where the disengagement prevention lugs 47 of the seat section 40 and the cutouts 88c overlap with each other in the projection in the movement direction along which the seat section 40 moves when it is detached from the base 60 (the position shown by two-dot chain lines in Fig. 15), the seat section 40 can be detached from the base 60 without causing interference between the disengagement prevention lug 47 and the disengagement prevention flange 88.

In the illustrated example, the disengagement prevention flange 88 has a rear disengagement prevention flange 88r provided behind the central opening 86, and a front disengagement prevention flange 88f provided in front of the central opening 86. In addition, the cutouts 88c are provided between both ends of the rear disengagement prevention flange 88r and both ends of the front disengagement prevention flange 88f, respectively. Thus, by rotating the seat section 40 relative to the base 60 up to the position shown by the solid lines or the broken lines in Fig. 5, the disengagement prevention lugs 47 of the seat section 40 are located in the positions where the disengagement prevention lugs 47 overlap with the cutouts 88c, as shown in Fig. 15.

The disengagement prevention flange 88 may have a gap instead of the cutout 88c. Namely, a part of the disengagement prevention flange 88 including the front disengagement prevention flange 88f and a part of the disengagement prevention flange 88 including the rear disengagement prevention flange 88r may be completely separated from each other. Also in a case where the disengagement prevention flange 88 is thus formed, in the projection in the movement direction along which the seat section 40 moves when it is detached from the base 60, the seat section 40 can be detached from the base 60 by rotating the seat section 40 relative to the base 60 up to the position where the gaps and the disengagement prevention lugs 47 of the seat section 40 overlap with each other.

In the upper surface of the seat section holder 85, the rotation restriction recess 89 for receiving the rotation restriction protrusion 55 of the seat section 40 is formed. When the rotation restriction protrusion 55 is received in the rotation restriction recess 89, the rotation of the seat section 40 relative to the base 60 is prevented. In the illustrated example, the seat section holder 85 has a front rotation restriction recess 89f formed in front of the central opening 86, a rear rotation restriction recess 89r formed behind the central opening 86, and two side rotation restriction recesses 89a, 89b formed on both sides of the central opening 86 in the width direction of the base 60.

The front rotation restriction recess 89f and the rear rotation restriction recess 89r are positioned as described below. Namely, the front rotation restriction recess 89f is positioned such that, when the rotation restriction protrusion 55 of the seat section 40 is received in the front rotation restriction recess 89f, the seat section 40 is in the forward-facing state and the disengagement prevention lugs 47 of the seat section 40 overlap with the rear lugs 66r and the front lugs 66f of the leg portions 62a, 62b in the projection in the movement direction along which the seat section 40 moves when it is detached from the base 60. Also, the rear rotation restriction recess 89r is positioned such that, when the rotation restriction protrusion 55 of the seat section 40 is received in the rear rotation restriction recess 89r, the seat section 40 is in the rearward-facing state and the disengagement prevention lugs 47 of the seat section 40 overlap with the rear lugs 66r and the front lugs 66f of the leg portions 62a, 62b in the projection in the movement direction along which the seat section 40 moves when it is detached from the base 60. Thus, when the rotation restriction protrusion 55 of the seat section 40 is received in the front rotation restriction recess 89f or the rear rotation restriction recess 89r, the seat section 40 is securely held on the leg portions 62a, 62b (i.e., on the base 60) because the disengagement prevention lugs 47 are in contact with (interfere with) the rear lugs 66r and the front lugs 66f of the leg portions 62a, 62b from below.

In addition, the side rotation restriction recesses 89a, 89b are positioned as described below. Namely, the side rotation restriction recesses 89a, 89b are positioned such that, when the rotation restriction protrusion 55 of the seat section 40 is received in the side rotation restriction recess 89a or 89b, the seat section 40 is located in the detachment position and faces one side or the other side in the width direction of the base 60 (see Fig. 5) and the disengagement prevention lugs 47 of the seat section 40 do not overlap with the rear lugs 66r and the front lugs 66f of the leg portions 62a, 62b in the projection in the movement direction along which the seat section 40 moves when it is detached from the base 60. Thus, when the rotation restriction protrusion 55 of the seat section 40 is received in either of the side rotation restriction recesses 89a, 89b, the seat section 40 can be detached from the base 60 without causing contact (interference) between the disengagement prevention lugs 47 of the seat section 40 and the rear lugs 66r and the front lugs 66f of the leg portions 62a, 62b.

Next, the proximal portion 21 of the platform 20 is described in detail with reference to Fig. 14. The proximal portion 21 has a proximal portion body 23a and a cover member 23b that covers the proximal portion body 23a. The proximal portion body 23a has a restriction portion 30 that restricts the sliding movement of the base 60 relative to the platform 20. The restriction portion 30 is provided centrally on the proximal portion body 23a in the width direction of the proximal portion body 23a. The restriction portion 30 includes a pair of the ridges 31a, 31b that extend in the back and forth direction and are spaced apart from each other. Each of the ridges 31a, 31b includes grooves 32 capable of receiving from above the engagement shaft 71 extending in the width direction of the platform 20. A plurality of the grooves 32 are formed so that they are spaced apart from each other in the back and forth direction. Thus, the inclination of the base 60 relative to the platform 20 can be adjusted to multiple degrees.

The cover member 23b is provided centrally in the width direction with an opening 24 from which the restriction portion 30 is exposed. Thus, the ridges 31a, 31b of the restriction portion 30 can engage with the engagement shaft 71 of the base 60.

The upper surface of the bottom member 23a includes, on the both sides of the restriction portion 30 in the width direction, support surfaces 23as that support the leg-portion slidable contact portions 65 of the seat section 40. As well seen in Fig. 8, the support surface 23as includes a curved part and an inclined part so that the further the seat section 40 moves forward relative to the base 60, the further the seat section 40 inclines rearward relative to the base 60.

Further, on the upper surface of the proximal portion body 23a, a rear holder 25 is fixed behind the restriction portion 30. The rear holder 25 holds the rear end of the base 60 such that the base 60 can move in the back and forth direction. To be specific, the rear holder 25 includes a through-hole 25h through which the rear-end connection shaft 73c of the leg portions 62a, 62b of the base 60 extends. Since the rear-end connection shaft 73c extends through the through-hole 25h, the base 60 is prevented from being disengaged from the platform 20. The through-hole 25 extends in the back and forth direction. Since the through-hole 25h extends in the back and forth direction, the base 60 is movable in the back and forth direction relative to the platform 20. In the illustrated example, the further the base 60 moves forward, the further the rear end of the base 60 moves downward (see Fig. 2). In order not to inhibit such a movement of the base 60, the through-hole 25h inclines downward to the front.

Between the cover member 23b and the proximal portion body 23a, a front guide 26 that guides the front end of the base 60 is formed in a position in front of the restriction portion 30. To be more specific, in the opening-circumferential surface 24s that defines the opening 24 of the cover member 23b, a cutout 27 is formed in front of the restriction portion 30. The front-end connection shaft 73b of the base 60 is inserted into the cutout 27. In the illustrated example, the further the base 60 moves forward, the further the front end of the base 60 moves upward (see Fig. 2). In order not to inhibit such a movement of the base 60, the cutout 27 extends in the back and forth direction and inclines upward to the front.

As described above, the further the base 60 moves forward relative to the platform 20, the further the rear end of the base 60 moves downward and the further the front end of the base 60 moves upward (see Fig. 2). Thus, by moving the base 60 in the back and forth direction relative to the platform 20, the inclination of the base 60 relative to the platform 20 is changed.

Next, a process in the reclining operation of the child seat 10 as structured above is described with reference to Figs. 2 and 14.

A case in which the seat section 40 is reclined from the position shown by solid lines in Fig. 2 is described below. Firstly, as shown in Fig. 14, the engagement shaft 71 of the base 60 is received in the groove 32 positioned rearmost in the ridges 31a, 31b provided on the proximal portion 21 of the platform 20. Thus, the base 60 is in the position shown by the solid lines in Fig. 2 and is prevented from moving forward and backward relative to the platform 20.

In this state, by pulling forward the tab 76 of the operation portion 75, the support portion 72 turns so that the engagement shaft 71 moves upward and out of the grooves 32. Then, by pulling the tab 76 further forward, the engagement shaft 71 and the pair of leg portions 62a, 62b move forward together with the support portion 72. Thus, the seat section 40 supported on the base 60 moves forward together with the base 60. At this time, since the leg portions 62a, 62b of the base 60 are guided by the rear holder 25 and the front guide 26 of the platform 20, the base 60 inclines together with the seat section 40 relative to the platform 20. When the inclination of the seat section 40 relative to the platform 20 reaches a desired one, the operation of the operation portion 75 is finished. Thus, the support portion 72 turns so that the engagement shaft 71 moves downward, and the engagement shaft 71 is received in the grooves 32 in the ridges 31a, 31b. As a result, the back and forth movement of the base 60 and the seat section 40 relative to the platform 20 is prevented with the base 60 and the seat section 40 inclined relative to the platform 20.

On the other hand, in order to raise the seat section 40 inclined relative to the platform 20, the following operation is performed. Namely, the tab 76 of the operation portion 75 is pulled forward to turn the support portion 72. Thus, the engagement shaft 71 moves upward and out of the grooves 32. In this state, the base 60 is pushed and moved rearward together with the seat section 40. At this time, since the leg portions 62a, 62b of the base 60 are guided by the rear holder 25 and the front guide 26 of the platform 20, the base 60 is raised together with the seat section 40 relative to the platform 20. When the inclination of the seat section 40 relative to the platform 20 reaches a desired one, the operation of the operation portion 75 is finished. Thus, the support portion 72 turns so that the engagement shaft 71 moves downward, and the engagement shaft 71 is received in the grooves 32 of the ridges 31a, 31b. As a result, the back and forth movement of the base 60 and the seat section 40 relative to the platform 20 is prevented with the base 60 and the seat section 40 raised.

Next, a process in the rotating operation of the seat section 40 relative to the platform 20 is described with reference to Figs. 3 and 15.

A case in which the seat section 40 is rotated from the forward-facing state to the rearward-facing state is described below. Firstly, the rotation restriction protrusion 55 of the seat section 40 is received in the front rotation restriction recess 89f in the base 60. Thus, the rotation of the seat section 40 relative to the base 60 and the platform 20 is prevented. In this state, the lock member 49 is located in the interference position, where it interferes with the restriction portion 87 of the base 60.

In order to rotate the seat section 40, the rotation restriction protrusion operation means 56 is operated to pull the rotation restriction protrusion 55 upward. Thus, the rotation restriction protrusion 55 moves out of the front rotation restriction recess 89f in the base 60. Then, the seat section 40 is rotated around the rotation axis Rx relative to the base 60. During the rotation of the seat section 40 from the forward-facing state to the rearward-facing state, the seat section 40 passes a position at which its disengagement prevention lugs 47 overlap with the cutouts 88c of the seat section holder 85 in the projection in the movement direction along which the seat section 40 moves when it is detached from the base 60 (see Fig. 15). Namely, the seat section 40 passes the aforementioned detachment position. However, since the lock member 49 located in the interference position and the restriction portion 87 interfere with each other, the seat section 40 is prevented from being detached from the base 60.

When the seat section 40 reaches the rearward-facing state, the operation of the rotation restriction protrusion operation means 56 is finished. Thus, the rotation restriction protrusion 55 moves downward to be received in the rear rotation restriction recess 89r. As a result, the turning of the seat section 40 relative to the base 60 and the platform 20 is prevented.

In order to rotate the seat section 40 from the rearward-facing state to the forward-facing state, an operation similar to the aforementioned rotation operation is performed.

Next, a process in the detachment operation for detaching the seat section 40 from the platform 20 is described with reference to Figs. 5, 10, 11 and 15.

Firstly, by carrying out the same operation as the aforementioned rotating operation or a similar operation to it, the seat section 40 is rotated and moved up to the detachment position shown in Fig. 5. Thus, as shown in Fig. 15, the disengagement prevention lugs 47 of the seat section 40 are located in positions in which they overlap with the cutouts 88c of the seat section holder 85 in the projection in the movement direction along which the seat section 40 moves when it is detached from the base 60. Then, by moving the operation member 50 from the not-operated position to the operated position shown in Fig. 11, the lock member 49 moves from the interference position to the release poison shown in Fig. 10. Thus, the seat section 40 can be detached from the base 60 and the platform 20. Then, the seat section 40 is drawn out from the base 60 along the direction in which the rotation axis Rx extends.

In order to attach the seat section 40 to the base 60, an operation reverse to the above detachment operation is performed.

In the aforementioned example, the case in which the disengagement prevention lug 47 is provided on the seat section 40 and the disengagement prevention flange 88 is provided on the base 60 is described. However, the present invention is not limited thereto. For example, the disengagement prevention lug 47 may be provided on the base 60, and the disengagement prevention flange 88 may be provided on the seat section 40. In addition, the disengagement prevention lug 47 may project outward in a radial direction around the rotation axis Rx.

In addition, in the aforementioned example, the case in which the seat section 40 has the lock member 49 and the base 60 has the restriction portion 87 is described. However, the present invention is not limited thereto. For example, the base 60 may have the lock member 49, and the seat section 40 may have the restriction portion 87. In this case, the detachment of the seat section 40 from the base 60 is prevented by the contact (interference) between the lock member 49 and the seat section 40. When the base 60 has the lock member 49 and the seat section 40 has the restriction portion 87, the operation member 50 may be provided on the base 60.

In addition, in the aforementioned example, the case in which the first operation member 50a and the second operation member 50b are provided on one side and the other side of the seat section 40 in the width direction of the seat section 40 is described. However, the present invention is not limited thereto. For example, the first operation member 50a and the second operation member 50b may be provided on one side and the other side in the back and forth direction of the seat section 40.

As described above, according to this embodiment, the child seat 10 comprises the platform 20, the base 60 supported on the platform 20 such that the inclination of the base 60 can be changed, and the seat section 40 rotatably and detachably supported on the base 60. According to such a child seat 10, the seat section 40 can be reclined and rotated relative to the platform 20, and can also be detached from the platform 20.

In this embodiment, when the seat section 40 is located in the predetermined detachment position with respect to the base 60, the seat section 40 can be detached from the base 60, and when the seat section 40 is located in a relative rotation position other than the aforementioned detachment position with respect to the base 60, the base 40 cannot be detached from the base 60. Thus, unless the seat section 40 is located in the detachment position, there is no possibility that the seat section 40 is disengaged from the base 60. Thus, unintentional disengagement of the seat section 40 from the base 60 can be effectively prevented, while the seat section 40 can be detached from the base 60 when required.

In addition, in this embodiment, one of the base 60 and the seat section 40 has the disengagement prevention lug 47 that projects in one direction of the radial direction around the axis Rx of the rotation of the seat section 40 relative to the base 60, while the other one of the base 60 and the seat section 40 has the disengagement prevention flange 88 that projects in the opposite direction of the radial direction. The disengagement prevention flange 88 is provided with the cutout 88c or the gap that has the width along the circumferential direction rd around the rotation axis Rx, the width being longer than the width of the disengagement prevention lug 47 along the circumferential direction rd. Thus, when the seat section 40 is located in the aforementioned relative rotation position, the seat section 40 is prevented from being disengaged from the base 60 by the interference between the disengagement prevention lug 47 and the disengagement prevention flange 88. On the other hand, when the seat section 40 is located in the detachment position, the interference between the disengagement prevention lug 47 and the disengagement prevention flange 88 is avoided by means of the cutout 88c or the gap, thereby the seat section 40 can be detached from the base 60.

In addition, in this embodiment, the disengagement prevention flange 88 circumferentially extends along the aforementioned circumferential direction rd. Thus, the rotation of the seat section 40 relative to the base 60 can be stabilized.

In addition, in this embodiment, one of the base 60 and the seat section 40 has the lock member 49 that is movable between the interference position and the release position. When the lock member 49 is located in the interference position, the detachment of the seat section 40 from the base 60 is prevented by the contact between the lock member 49 and the other one of the base 60 and the seat section 40. On the other hand, when the lock member 49 is located in the release position, the detachment of the seat section 40 from the base 60 is allowed. Thus, unless the lock member 49 is located in the aforementioned release position, there is no possibility that the seat section 40 is disengaged from the base 60. Thus, unintentional disengagement of the seat section 40 from the base 60 can be effectively prevented, while the seat section 40 can be detached from the base 60 when required.

To be specific, one of the base 60 and the seat section 40 has the lock member 49 that is movable between the interference position and the release position. In addition, the other one of the base 60 and the seat section 40 has the restriction portion 87 that is provided in a position where, in the projection in the movement direction along which the seat section 40 moves when it is detached from the base 60, the restriction portion 87 overlaps with the lock member 49 located in the aforementioned interference position, and does not overlap with the lock member 49 located in the aforementioned release position. The detachment of the seat section 40 from the base 60 is prevented by the interference between the restriction portion 87 and the lock member 49 located in the aforementioned interference position.

In addition, in this embodiment, in a state where a force for detaching the seat section 40 from the base 60 is not applied, the lock member 49 may be spaced apart from the base 60 and the seat section 40. In other words, the seat section 40 may not be held on the base 60 by the contact of the lock member 49 with the base 60 and the seat section 40, but may be held by another member. This allows the lock member 49 and members and mechanisms related to the lock member 49 to be designed more freely.

In addition, in this embodiment, the lock member 49 has the first lock member 49a and the second lock member 49b that can be moved independently of each other. One of the base 60 and the seat section 40 has the first and second operation members 50a, 50b that can be operated independently of each other, the first operation transmission means 51a that is provided between the first operation member 50a and the first lock member 49a so as to transmit the movement of the first operation member 50a to the first lock member 49a, and the second operation transmission means 51b that is provided between the second operation member 50b and the second lock member 49b so as to transmit the movement of the second operation member 50b to the second lock member 49b. Thus, only when both the first operation member 50a and the second operation member 50b are operated, the detachment of the seat section 40 from the base 60 is allowed. As a result, unintentional disengagement of the seat section 40 from the base 60 can be effectively prevented.

In addition, in this embodiment, the seat section 40 has the seat section frame 41 supported on the base 60, the cushion member 42 supported on the seat section frame 41, and the first and second operation members 50a, 50b that are positioned opposite one another with the cushion member 42 present between the first operation member 50a and the second operation member 50b. Thus, a user can operate the operation members 50a, 50b while holding the seat section 40 stably from both sides of the cushion member 42. Namely, the user can detach the seat section 40 from the base 60 while operating the operation members 50a, 50b.

To be specific, the seat section 40 has: the seat section frame 41 supported on the base 60, the seat section frame 41 having the seat portion 43a, the backrest portion 43b and the first and second side portions 44a, 44b that are provided oppositely to each other; the first operation member 50a provided on the first side portion 44a of the seat section frame 41; and the second operation member 50b provided on the second side portion 44b of the seat section frame 41. In this case, when the seat section 40 is rotated up to a position where it faces the doorway of the vehicle, it is easy to take the seat section 40 out of the vehicle through the doorway. In general, the size of the seat section 40 in the width direction is smaller than the size of the seat section 40 in the back and forth direction. Thus, by rotating the seat section 40 up to the position at which it faces the doorway of the vehicle, the seat section 40 can be easily taken out of the vehicle even if the doorway is narrow.

In addition, in this embodiment, one of the base 60 and the seat section 40 has the operation member 50 that moves from the not-operated position to the operated position when operated, and the operation transmission means 51 that moves the lock member 49 from the aforementioned interference position to the aforementioned release position in accordance with the movement of the operation member 50 from the aforementioned not-operated position to the aforementioned operated position. The operation member 50 moves from the not-operated position to the operated position along the direction parallel to the direction of the relative movement of the seat section 40 and the base 60 when the seat section 40 is detached from the base 60. In this case, it is easy to carry out the operation of the operation member 50 and the operation for separating the seat section 40 from the base 60 (the operation for bringing up the seat section 40 along the direction of the aforementioned relative movement) as a series of operations. Namely, the detachment operation of the seat section 40 from the base 60 is simplified.

In addition, the child seat 10 in this embodiment has the platform 20, and the seat section 40 provided on the platform 20 such that the inclination of the seat section 40 relative to the platform 20 can be changed, and that the seat section 40 is rotatable relative to the platform 20 and is separable from the platform 20. According to such a child seat 10, the seat section 40 can be reclined and rotated relative to the platform 20, and can also be detached from the platform 20.

Some modification examples on the aforementioned embodiment have been described. It goes without saying that these modification examples can be combined and applied.

## Claims

1. A child seat (10) comprising:
a platform (20);
a base (60) supported on the platform (20) such that inclination of the base (60) can be changed; and
a seat section (40) rotatably and detachably supported on the base (60).

2. The child seat (10) according to claim 1, wherein
when the seat section (40) is located in a predetermined detachment position with respect to the base (60), the seat section (40) can be detached from the base (60), and when the seat section (40) is located in a relative rotation position other than the detachment position with respect to the base (60), the seat section (40) cannot be detached from the base (60).

3. The child seat (10) according to claim 1 or 2, wherein:
one of the base (60) and the seat section (40) has a disengagement prevention lug (47) that projects in one direction of a radial direction around an axis of rotation (Rx) of the seat section (40) relative to the base (60);
the other one of the base (60) and the seat section (40) has a disengagement prevention flange (88) that projects in an opposite direction of the radial direction; and
the disengagement prevention flange (88) is provided with a cutout (88c) or a gap that has a width along a circumferential direction (rd) around the axis of rotation (Rx), the width being longer than a width of the disengagement prevention lug (47) along the circumferential direction (rd).

4. The child seat (10) according to claim 3, wherein
the disengagement prevention flange (88) circumferentially extends along the circumferential direction (rd).

5. The child seat (10) according to any one of claims 1 to 4, wherein:
one of the base (60) and the seat section (40) has a lock member (49) that is movable between an interference position and a release position;
when the lock member (49) is located in the interference position, detachment of the seat section (40) from the base (60) is prevented by contact between the lock member (49) and the other one of the base (60) and the seat section (40); and
when the lock member (49) is located in the release position, the detachment of the seat section (40) from the base (60) is allowed.

6. The child seat (10) according to any one of claims 1 to 5, wherein:
one of the base (60) and the seat section (40) has a lock member (49) that is movable between an interference position and a release position;
the other one of the base (60) and the seat section (40) has a restriction portion (87) that is provided in a position where, in a projection in a movement direction along which the seat section (40) moves when it is detached from the base (60), the restriction portion (87) overlaps with the lock member (49) located in the interference position, and does not overlap with the lock member (49) located in the release position; and
detachment of the seat section (40) from the base (60) is prevented by the restriction portion (87) and the lock member (49) located in the interference position.

7. The child seat (10) according to claim 5 or 6, wherein
in a state where a force for detaching the seat section (40) from the base (60) is not applied, the lock member (49) is spaced apart from the base (60) and the seat section (40).

8. The child seat (10) according to any one of claims 5 to 7, wherein:
the lock member (49) has a first lock member (49a) and a second lock member (49b) that can move independently of each other; and
one of the base (60) and the seat section (40) has a first operation member (50a) and a second operation member (50b) that can be operated independently of each other, a first operation transmission means (51a) that is provided between the first operation member (50a) and the first lock member (49a) so as to transmit a movement of the first operation member (50a) to the first lock member (49a), and a second operation transmission means (51b) that is provided between the second operation member (50b) and the second lock member (49b) so as to transmit a movement of the second operation member (50b) to the second lock member (49b).

9. The child seat (10) according to claim 8, wherein
the seat section (40) has a seat section frame (41) supported on the base (60), a cushion member (42) supported on the seat section frame (41), and the first operation member (50a) and the second operation member (50b) positioned opposite one another with the cushion member (42) present between the first operation members (50a) and the second operation member (50b).

10. The child seat (10) according to claim 8 or 9, wherein
the seat section (40) has: a seat section frame (41) supported on the base (60), the seat section frame (41) having a seat portion (43a), a backrest portion (43b), and a first side portion (44a) and a second side portion (44b) that are provided oppositely to each other; the first operation member (50a) provided on the first side portion (44a) of the seat section frame (41); and the second operation member (50b) provided on the side portion (44b) of the seat section frame (41).

11. The child seat (10) according to any one of claims 5 to 7, wherein:
one of the base (60) and the seat section (40) has an operation member (50) that moves from a not-operated position to an operated position when operated, and an operation transmission means (51) that moves the lock member (49) from the interference position to the release position in accordance with the movement of the operation member (50) from the not-operated position to the operated position; and
the operation member (50) moves from the not-operated position to the operated position along a direction parallel to a direction of relative movement of the seat section (40) and the base 60 when the seat section (40) is detached from the base (60).
